# EUROPÄISCHE PATENTSCHRIFT

(11) **EP 3 001 664 B1**
(45) Veröffentlichungstag und Bekanntmachung des Hinweises auf die Patenterteilung: **12.08.2020**
(21) Anmeldenummer: 14186429.8
(22) Anmeldetag: 25.09.2014
(51) Int. Cl.: H04N 1/00

(54) **Datenerfassungsvorrichtung und Verfahren zum Erfassen und geordneten Speichern von Daten eines einen Bezahlvorgang betreffenden gedruckten und/oder geschriebenen Dokuments**
Data acquisition device and method for acquiring and ordered storing of data of a printed and/or written document related to a payment process
Dispositif de saisie de données et procédé de saisie et de mémorisation ordonnée de données d'un document écrit et/ou imprimé concernant un processus de paiement

(43) Veröffentlichungstag der Anmeldung: 30.03.2016
(73) Patentinhaber: Gläß, Rainer, 08261 Schöneck (DE)
(72) Erfinder: Gläß, Rainer, 08261 Schöneck (DE)
(74) Vertreter: Zenz Patentanwälte Partnerschaft mbB

(56) Entgegenhaltungen:
- WO-A1-2014/089701
- AU-A4- 2013 100 634
- US-A1- 2012 284 081
- US-A1- 2013 290 033
- Allyson Kazmucha: "Best app to keep track of receipts on your iPhone", , 1. März 2013 (2013-03-01), XP002737161, Gefunden im Internet: URL:http://www.imore.com/best-app-keep-tra ck-receipts-your-iphone [gefunden am 2015-03-12]
- "FAQ (Frequently Asked Questions) (/blog/how-to-collect-paper-receipts)", IQBOXY , 27 August 2014 (2014-08-27), Retrieved from the Internet: URL:https://www.iqboxy.com/faq/ [retrieved on 2015-03-12]

## Beschreibung

Die Erfindung betrifft eine Datenerfassungsvorrichtung zum Erfassen und geordneten Speichern von Daten eines einen Bezahlvorgang betreffenden gedruckten und/oder geschriebenen Dokuments, insbesondere eines Kassenbons, einer Quittung oder einer Rechnung, wobei die Datenerfassungsvorrichtung ein eine Kamera, ein Display und Schnittstellen zur Kommunikation über ein Datenkommunikationsnetz aufweisendes Datenkommunikationsgerät eines Benutzers, insbesondere ein Mobiltelefon, und einen mit dem Datenkommunikationsnetz gekoppelten Server aufweist, wobei das Datenkommunikationsgerät so konfiguriert ist, dass es in Abhängigkeit von einer vorgegebenen Benutzereingabe wenigstens ein elektronisches Abbild des Dokuments mittels der Kamera gewinnt und in Form einer Bilddatei speichert, die wenigstens eine Bilddatei an eine vorgegebene Adresse über das Datenkommunikationsnetz sendet und Antwort-Nachrichten empfangen kann, und wobei der Server unter der vorgegebenen Adresse adressierbar ist und über ausreichende Ressourcen zur Abarbeitung einer Erkennungssoftware verfügt, wobei die Erkennungssoftware eine Software ist, die in einem Abbild des Dokuments enthaltene alphanumerische Zeichen und darüber hinaus auf der Basis der erkannten Zeichen und der Anordnung der Zeichen in dem Dokument auch die Art des Dokuments und bestimmte enthaltene Informationen erkennen kann, wobei der Server so konfiguriert ist, dass er die von dem Datenkommunikationsgerät gesendete wenigstens eine Bilddatei empfängt und mittels der auf dem Server abgearbeiteten Erkennungssoftware verarbeitet, wobei er die auf dem der wenigstens einen Bilddatei zugrunde liegenden Dokument enthaltenen alphanumerischen Informationen erkennt, erkennt, ob es sich um ein einen Bezahlvorgang betreffendes Dokument handelt, und dann, wenn es sich um ein einen Bezahlvorgang betreffendes Dokument handelt, die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammenstellt.

Ferner betrifft die Erfindung ein Verfahren zum Erfassen und geordneten Speichern von Daten eines einen Bezahlvorgang betreffenden gedruckten und/oder geschriebenen Dokuments, insbesondere eines Kassenbons, einer Quittung oder einer Rechnung, bei dem wenigstens ein elektronisches Abbild des Dokuments mittels einer Kamera eines Datenkommunikationsgeräts, insbesondere eines Mobiltelefons, eines Benutzers gewonnen und in Form wenigstens einer Bilddatei in dem Datenkommunikationsgerät gespeichert wird, die wenigstens eine Bilddatei von dem Datenkommunikationsgerät an einen Server übermittelt wird, wobei der Server über ausreichende Ressourcen zur Abarbeitung einer Erkennungssoftware verfügt, wobei die Erkennungssoftware eine Software ist, die in einem Abbild des Dokuments enthaltene alphanumerische Zeichen und darüber hinaus auf der Basis der erkannten Zeichen und der Anordnung der Zeichen in dem Dokument auch die Art des Dokuments und bestimmte enthaltene Informationen erkennen kann, die wenigstens eine Bilddatei mittels der auf dem Server abgearbeiteten Erkennungssoftware verarbeitet wird, wobei die auf dem der wenigstens einen Bilddatei zugrunde liegenden Dokument enthaltenen alphanumerischen Informationen erkannt werden, erkannt wird, ob es sich um ein einen Bezahlvorgang betreffendes Dokument handelt, und dann, wenn es sich um ein einen Bezahlvorgang betreffendes Dokument handelt, die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammengestellt werden.

Aus der WO 2014/089701 A1 sind Systeme und Verfahren zum Verwalten von Finanztransaktionen bekannt, die Zuordnungen zwischen Bankdaten, Quelldokumenten und manuellen oder automatisierten Finanzdaten feststellen und somit eine Buchführung unterstützen können. Es wird unter anderem beschrieben, dass mittels eines Geräts, z.B. eines Smartphones, eine Aufnahme eines Belegs gemacht und das Bild direkt zu einem Server gesendet wird, wonach der Server das Bild mittels OCR verarbeitet, um Informationen über die auf dem Beleg enthaltene Transaktion zu erlangen und eine Kopie des Belegs zu speichern.

Aus der US 2012/0284081 A1 sind Verfahren und Einrichtungen bekannt, die der Erlangung von Informationen aus unterschiedlichen Dokumenten dienen. Solche Dokumente umfassen unter anderem auf Papier ausgedruckte Belege oder Quittungen, die durch Scannen oder Fotografieren in eine digitale Form überführt werden können. Es wird unter anderem beschrieben, dass eine solche Aufnahme eines Dokuments mittels eines mit einem Computer verbundenen Scanners oder eines anstelle des Scanners verwendeten Smartphones oder anderen Kommunikationsgeräts gewonnen werden kann.

Die US 2013/0290033 A1 beschreibt Systeme und Verfahren zum Erstellen von Inventarverzeichnissen auf der Basis einer Analyse von Kaufbelegen oder E-Mails, die Käufe von in solche Inventarverzeichnisse aufzunehmenden Gegenständen betreffen. Bei einer beschriebenen Ausführungsform können mittels eines Smartphones Aufnahmen von Papierkaufbelegen gemacht und mittels einer auf dem Smartphone laufenden OCR-Software Daten des Kaufbelegs gewonnen und in einem E-Mail-Konto gespeichert werden.

In der AU 2013100634 A4 wird auf die US 2013/0060713 A1 Bezug genommen, aus der es bekannt sei, dass eine mit ausreichender Verarbeitungsleistung ausgestattete Host-Einheit Aufgaben wie OCR übernimmt und eine bildbasierte Kopie wie auch eine textbasierte Kopie zusammen versenden kann, wobei die textbasierte Kopie einfacher in eine Buchhaltungssoftware geladen werden kann. Aus der AU 2013100634 A4 sind ferner Verfahren und Einrichtungen bekannt, bei denen u.a. Abbildungen von Belegen von einem Smartphone eines Benutzers in einem als OCR lesbaren Format gespeichert und zu einem Server gesendet werden können.

Es ist ferner bekannt, Rechnungsdokumente, die bei Unternehmen in großer Zahl und in unterschiedlichsten Formaten eingehen, mit leistungsfähigen Scannern zu erfassen und dann die gescannten Abbild-Dateien mittels leistungsfähiger OCR-Software, die auf leistungsfähigen Rechnern abgearbeitet wird, zu analysieren. Ein Beispiel ist die Software OnBase AnyDoc der Firma Hyland Software, Inc., mit der es Unternehmen unter anderem ermöglicht wird, mit Hilfe von Leistungsscannern alle per Post eingehenden Dokumente zu scannen, und automatisch mittels leistungsfähiger Computer-Hardware deren Text zu erkennen, die gescannten Dokumente zu klassifizieren, d.h. unter anderem zu erkennen, ob es sich um Rechnungen handelt und die Rechnungsdaten zu extrahieren, zu prüfen und in die betriebswirtschaftliche Software des Unternehmens (wie z.B. SAP) zu exportieren.

Privaten Haushalten steht eine derart leistungsfähige Hardware in der Regel nicht zur Verfügung. Dennoch besteht auch dort der Wunsch, eingehende Rechnungen automatisiert erfassen und auf der Basis der erfassten Rechnungsdaten eine Bezahlung in die Wege zu leiten. Ein anderer Wunsch ist die Möglichkeit, Kassenbons und andere Bezahlquittungen auf einfache Weise und ohne den Aufwand teurer Hard- und Software automatisiert erfassen zu können und deren Daten z.B. in einem Haushalts-Ausgabenbuch verwalten zu können.

Aufgabe der Erfindung ist es daher, die Möglichkeit zu schaffen, dass ohne den Aufwand teurer Hard- und Software private oder kleine Nutzer in die Lage versetzt werden können, Daten eines einen Bezahlvorgang betreffenden gedruckten und/oder geschriebenen Dokuments, insbesondere eines Kassenbons, einer Quittung oder einer Rechnung, automatisiert zu erfassen und geordnet zu speichern.

Diese Aufgabe wird erfindungsgemäß durch eine Datenerfassungsvorrichtung mit den Merkmalen des Anspruchs 1 bzw. durch ein Verfahren mit den Merkmalen des Anspruchs 5 gelöst.

Die erfindungsgemäße Datenerfassungsvorrichtung zum Erfassen und geordneten Speichern von Daten eines einen Bezahlvorgang betreffenden gedruckten und/oder geschriebenen Dokuments (beispielsweise eines Dokuments, das vorgedruckt ist und zusätzlich handschriftliche Eintragungen enthält), insbesondere eines Kassenbons, einer Quittung oder einer Rechnung, weist mindestens ein eine Kamera, ein Display und Schnittstellen zur Kommunikation über ein Datenkommunikationsnetz aufweisendes Datenkommunikationsgerät eines Benutzers, insbesondere ein Mobiltelefon, auf. Anstelle eines Mobiltelefons könnte zum Beispiel auch ein Tablet-PC verwendet werden. Der Begriff des Datenkommunikationsnetzes umfasst hier physisch eine beliebige Kombination von drahtlosen Verbindungen, wie zum Beispiel die eines Mobilfunknetzes, und/oder Leitungsverbindungen und beliebige Kommunikationsprotokolle, wie zum Beispiel TCP/IP. Das Datenkommunikationsgerät verfügt nicht über ausreichende Ressourcen (d.h. beispielsweise Prozessorleistung und/oder Speichergröße) zur schnellen Abarbeitung einer Erkennungssoftware. Unter dem Begriff "Erkennungssoftware" wird hier eine Software verstanden, die nicht nur in einem Abbild eines Dokuments enthaltene alphanumerische Zeichen erkennen kann (Texterkennungs- oder OCR-Software), sondern darüber hinaus in der Lage ist, auf der Basis der erkannten Zeichen und der Anordnung der Zeichen in dem Dokument auch die Art des Dokuments und bestimmte in dem erkannten Text enthaltene Informationen zu erkennen. Das Datenkommunikationsgerät ist so konfiguriert, dass es in Abhängigkeit von einer vorgegebenen Benutzereingabe (beispielsweise Tasten- oder Touchscreen-Betätigung oder Spracheingabe) wenigstens ein elektronisches Abbild des Dokuments mittels der Kamera gewinnt und in Form wenigstens einer Bilddatei (beispielsweise eine JPEG-, GIF-, PNG- oder TIF-Datei) speichert, die wenigstens eine Bilddatei zusammen mit einer Identifikation des Benutzers (z.B. Telefonnummer und/oder Benutzername und Passwort) an eine vorgegebene Adresse (z.B. eine URL) über das Datenkommunikationsnetz sendet und Antwort-Nachrichten empfangen kann. Die erfindungsgemäße Datenerfassungsvorrichtung weist ferner einen mit dem Datenkommunikationsnetz gekoppelten Server auf, der unter der vorgegebenen Adresse adressierbar ist und der über ausreichende Ressourcen zur schnellen Abarbeitung einer Erkennungssoftware verfügt. Unter einem Server soll hier ein Computer oder ein Computersystem mit mehreren Computern, der bzw. das mit entsprechender Dienste-Software ausgestattet ist, verstanden werden. Der Server ist so konfiguriert, dass er die von dem Datenkommunikationsgerät gesendete wenigstens eine Bilddatei und die Benutzeridentifikation empfängt, die wenigstens eine Bilddatei mittels der auf dem Server abgearbeiteten Erkennungssoftware verarbeitet, wobei er die auf dem der wenigstens einen Bilddatei zugrunde liegenden Dokument enthaltenen alphanumerischen Informationen erkennt, erkennt, ob es sich um ein einen Bezahlvorgang betreffendes Dokument handelt, und dann, wenn es sich um ein einen Bezahlvorgang betreffendes Dokument handelt, auch erkennt, ob es sich bei dem Dokument um einen Zahlungsbeleg in Form eines Kassenbons oder einer Quittung handelt oder ob es sich bei dem Dokument um eine Rechnung handelt, und die für den Bezahlvorgang relevanten Daten, die jeweils zumindest die Leistung oder Ware kennzeichnende Daten, zugeordnete Preis-Daten und einen Zeitpunkt (z.B. Zeitpunkt der Kassenbon-Erstellung oder Datum der Quittung) kennzeichnende Daten umfassen, zu einem Datensatz eines vorgegebenen Formats zusammenstellt, den Datensatz in eine der Art des Bezahlvorgangs entsprechende Datenbank einstellt, wobei die Datenbank eine Zuordnung des Datensatzes zur Identifikation des Benutzers aufweist, und über das Datenkommunikationsnetz an das Datenkommunikationsgerät des Benutzers eine Antwort-Nachricht sendet, die das Einstellen der Daten des Dokuments in die Datenbank bestätigt. Weder der Datensatz noch die Datenbank sind hier auf ein bestimmtes Format beschränkt; ein Datensatz soll lediglich eine logisch zusammenhängende Menge von Daten sein und die Datenbank eine logische Struktur zum geordneten Speichern von Datensätzen.

Bei dem erfindungsgemäßen Verfahren zum Erfassen und geordneten Speichern von Daten eines einen Bezahlvorgang betreffenden gedruckten und/oder geschriebenen Dokuments, insbesondere eines Kassenbons, einer Quittung oder einer Rechnung, wird (a) wenigstens ein elektronisches Abbild des Dokuments mittels einer Kamera eines Datenkommunikationsgeräts, insbesondere eines Mobiltelefons, eines Benutzers gewonnen und in Form wenigstens einer Bilddatei in dem Datenkommunikationsgerät gespeichert, wobei das Datenkommunikationsgerät nicht über ausreichende Ressourcen zur schnellen Abarbeitung einer Erkennungssoftware verfügt, wird (b) die wenigstens eine Bilddatei von dem Datenkommunikationsgerät des Benutzers über ein Datenkommunikationsnetz an einen Server übermittelt, wobei der Server über ausreichende Ressourcen zur schnellen Abarbeitung einer Erkennungssoftware verfügt und wobei zugleich eine Identifikation des Benutzers an den Server übermittelt wird, und wird (c) die wenigstens eine Bilddatei mittels der auf dem Server abgearbeiteten Erkennungssoftware verarbeitet, wobei (c1) die auf dem der wenigstens einen Bilddatei zugrunde liegenden Dokument enthaltenen alphanumerischen Informationen erkannt werden, (c2) erkannt wird, ob es sich um ein einen Bezahlvorgang betreffendes Dokument handelt, und (c3) dann, wenn es sich um ein einen Bezahlvorgang betreffendes Dokument handelt, auch erkannt wird, ob es sich bei dem Dokument um einen Zahlungsbeleg in Form eines Kassenbons oder einer Quittung handelt oder ob es sich bei dem Dokument um eine Rechnung handelt, und die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammengestellt werden. Dann wird (d) der Datensatz in eine der Art des Bezahlvorgangs entsprechende Datenbank eingestellt, wobei die Datenbank eine Zuordnung des Datensatzes zur Identifikation des Benutzers aufweist. Schließlich wird (e) von dem Server über das Datenkommunikationsnetz an das Datenkommunikationsgerät des Benutzers eine Nachricht gesendet wird, die das Einstellen der Daten des Dokuments in die Datenbank bestätigt.

Die Erfindung basiert einerseits auf dem Grundgedanken, dass die automatisierte Erfassung der Daten auch mit Hilfe einer verbreiteten, bei den meisten potentiellen privaten und kleinen Nutzern bereits vorhandenen einfachen Hardware ermöglicht werden muss und somit die leistungsfähigere Ressourcen erfordernde Erkennungssoftware-Abarbeitung zu einem Ort ausgelagert werden soll, wo diese preiswert bereitgestellt und für viele Nutzer zugleich genutzt werden kann. Andererseits basiert die Erfindung auf der Erkenntnis, dass dann, wenn einfache Hardware-Ressourcen zur Gewinnung der Bilddatei verwendet werden, die Erkennungssoftware deutlich leistungsfähiger sein muss, und sie dies auch sein darf, weil deren Abarbeitung auf leistungsfähigen Rechnern erfolgen kann. Die Erfindung kombiniert in neuartiger Weise technische Defizite (einfache Hardware), aber auch neue technische Möglichkeiten (Kommunikationsmöglichkeiten, z.B. via Internet) auf der Nutzerseite mit einer zentralen Bereitstellung leistungsfähiger Verarbeitungsressourcen, deren Leistungsfähigkeit über das der bekannten, eingangs genannten OCR-Software noch hinausgeht.

Bei einem bevorzugten Ausführungsbeispiel ist das Datenkommunikationsgerät ein mobiles, handgehaltenes Datenkommunikationsgerät, insbesondere ein Mobiltelefon, und ist die auf dem Server abgearbeitete Objekterkennungssoftware in der Lage, auch dann die auf dem der wenigstens einen Bilddatei zugrunde liegenden Dokument enthaltenen alphanumerischen Informationen zu erkennen, wenn die Bilddatei das Dokument geometrisch verzerrt (z.B. aufgrund einer Aufnahme unter einem Winkel oder aufgrund einer Krümmung oder Faltung des Papierdokuments) und/oder in einem über das Dokument variierenden Kontrast (z.B. aufgrund ungünstiger Beleuchtungsverhältnisse) und/oder in einer geringen Bildauflösung (z.B. aufgrund eines Aufnehmens aus einer gewissen Entfernung zum Dokument) wiedergibt, die üblicherweise einer mittels einer Kamera eines mobilen, handgehaltenen Datenkommunikationsgeräts, insbesondere eines Mobiltelefons, gewonnenen Bilddatei anhaften können. Bei der entsprechenden bevorzugten Ausführungsform des Verfahrens wird das elektronische Abbild mittels einer Kamera eines mobilen, handgehaltenen Datenkommunikationsgeräts, insbesondere eines Mobiltelefons, gewonnen und werden die auf dem der wenigstens einen Bilddatei zugrunde liegenden Dokument enthaltenen alphanumerischen Informationen auch dann erkannt, wenn die Bilddatei das Dokument geometrisch verzerrt und/oder in einem über das Dokument variierenden Kontrast und/oder in einer geringen Bildauflösung wiedergibt, die üblicherweise einer mittels einer Kamera eines mobilen, handgehaltenen Datenkommunikationsgeräts, insbesondere eines Mobiltelefons, gewonnenen Bilddatei anhaften können. So können auch von einem technisch wenig erfahrenen Nutzer oder auch relativ flüchtig erstellte Aufnahmen einer Mobiltelefon-Kamera als Basis für eine Objekterkennung verwendet werden, da eine entsprechend leistungsfähigere Software und leistungsfähigere Hardware-Ressourcen auf der Server-Seite eingesetzt werden können, ohne die Gesamtkosten merklich zu erhöhen.

Bei einer ersten bevorzugten Anwendungsvariante der erfindungsgemäßen Datenerfassungsvorrichtung ist der Server so konfiguriert, dass er dann, wenn er erkennt, dass es sich bei dem Dokument um einen Zahlungsbeleg in Form eines Kassenbons oder einer Quittung handelt, der Datensatz in eine Ausgaben-Datenbank (die beispielsweise als eine Art Kassenbuch dienen kann) einstellt.

Bei der entsprechenden Anwendungsvariante des erfindungsgemäßen Verfahrens wird im oben genannten Schritt (c3) erkannt, dass es sich bei dem Dokument um einen Zahlungsbeleg in Form eines Kassenbons oder einer Quittung handelt, und dann der Datensatz im Schritt (d) in eine Ausgaben-Datenbank eingestellt.

Bei einer bevorzugten Weiterbildung der ersten Anwendungsvariante des erfindungsgemäßen Verfahrens wird auf eine Anforderung hin auf dem Server ein Programm abgearbeitet, das die Daten der Ausgaben-Datenbank statistisch auswertet, beispielsweise dahingehend, welche Waren wie oft in einem bestimmten Zeitraum gekauft wurden.

Bei einer zweiten bevorzugten Anwendungsvariante der erfindungsgemäßen Datenerfassungsvorrichtung ist der Server so konfiguriert, dass er dann, wenn er erkennt, dass es sich bei dem Dokument um eine Rechnung handelt, der Datensatz in eine Rechnungs-Datenbank einstellt, wobei er an den Benutzer eine Antwort-Nachricht sendet, die für das Auslösen eines Bezahlvorgangs erforderliche Daten, die die zu bezahlende Leistung oder Ware kennzeichnende Daten, den zu bezahlenden Betrag und den Empfänger der Zahlung kennzeichnende Daten mit einer Empfängerkontonummer umfassen, enthält. Hierbei geht der Server vorzugsweise von der Annahme aus, dass die Rechnung noch nicht bezahlt worden ist. Das Datenkommunikationsgerät ist so konfiguriert, dass es die Antwort-Nachricht empfängt, dem Benutzer die darin enthaltenen für das Auslösen eines Bezahlvorgangs erforderlichen Daten anzeigt, eine vorgegebene Eingabe des Benutzers überwacht, mit der der Benutzer das Auslösen des Bezahlvorgangs veranlassen kann, bei Feststellen dieser vorgegebenen Eingabe eine der Eingabe entsprechende Nachricht über das Datenkommunikationsnetz an den Server sendet. Der Benutzer kann beispielsweise dann, wenn er die Rechnung nicht bezahlen möchte (weil sie möglicherweise bereits bezahlt ist) eine entsprechende Nachricht an den Server senden. Der Server ist ferner so konfiguriert, dass er nach Empfang der der Eingabe entsprechenden Nachricht den Bezahlvorgang auf der Grundlage der Daten des Datensatzes ausführt.

Bei der entsprechenden Anwendungsvariante des erfindungsgemäßen Verfahrens wird im Schritt (c3) erkannt, dass es sich bei dem Dokument um eine Rechnung handelt, und dann der Datensatz im Schritt (d) in eine Rechnungs-Datenbank eingestellt wird, wobei im Schritt (e) an den Benutzer eine Antwort-Nachricht übermittelt wird, die für das Auslösen eines Bezahlvorgangs erforderliche Daten, die die zu bezahlende Leistung oder Ware kennzeichnende Daten, den zu bezahlenden Betrag und den Empfänger der Zahlung kennzeichnende Daten mit einer Empfängerkontonummer umfassen, enthält, woraufhin dem Benutzer die in der Antwort-Nachricht enthaltenen für das Auslösen eines Bezahlvorgangs erforderlichen Daten angezeigt werden, eine vorgegebene Eingabe des Benutzers überwacht wird, mit der der Benutzer das Auslösen des Bezahlvorgangs veranlassen kann, bei Feststellen dieser vorgegebenen Eingabe eine der Eingabe entsprechende Nachricht von dem Datenkommunikationsgerät über das Datenkommunikationsnetz an den Server übermittelt wird, woraufhin ein auf dem Server abgearbeitetes Programm den Bezahlvorgang auf der Grundlage der Daten des Datensatzes ausführt.

Vorteilhafte und/oder bevorzugte Ausführungsformen sind in den Unteransprüchen gekennzeichnet.

Nachfolgend wird die Erfindung anhand eines in der Zeichnung dargestellten bevorzugten Ausführungsbeispiels näher erläutert.

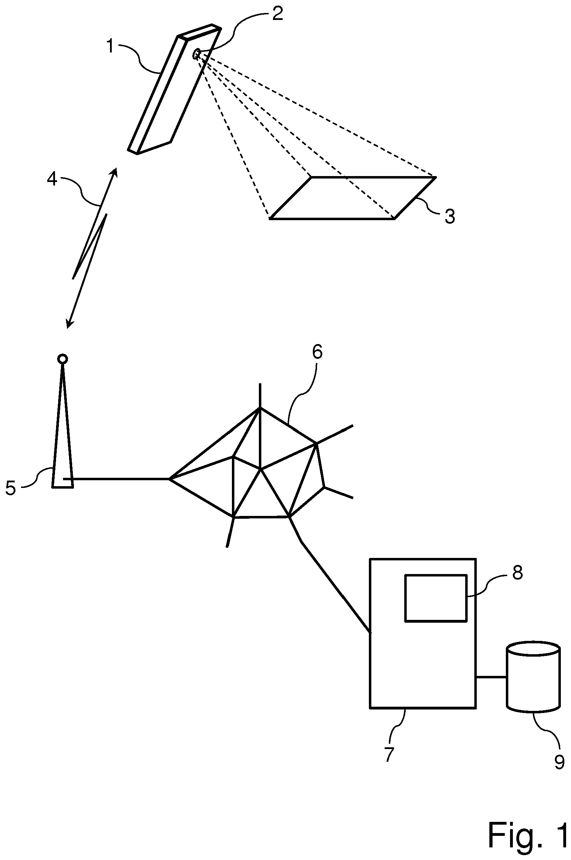

In der Zeichnung zeigt Fig. 1 eine Prinzipskizze des erfindungsgemäßen Datenerfassungssystems.

Das in Figur 1 dargestellte Datenerfassungssystem umfasst ein Mobiltelefon 1 eines Benutzers und einen entfernt angeordneten Server 7. Das Mobiltelefon 1 ist über entsprechende Schnittstellen mit dem Mobilfunknetz verbunden; die Verbindung ist hier durch den Pfeil 4 symbolisiert. Eine Funkstation 5 des Mobilfunkanbieters ist (über hier nicht dargestellte Datenverarbeitungsgeräte) mit einem Datenkommunikationsnetz 6, hier z.B. das Internet, gekoppelt. Auch der Server 7 ist mit dem Datenkommunikationsnetz 6 gekoppelt. Das Mobiltelefon kann in bekannter Weise eine Verbindung zu dem Server 7 aufbauen (z.B. über das Internet-Protokoll), die es der auf dem Mobiltelefon abgearbeiteten Software ermöglicht, Dateien an den Server zu übermitteln. Als "Adresse" verwendet diese auf dem Mobiltelefon abgearbeitete Software beispielsweise eine URL des Servers.

Dem Nutzer des Mobiltelefons 1 liegt ein Dokument 3 vor, beispielsweise ein Kassenbon oder eine zu bezahlende Rechnung. Der Kassenbon wie auch die Rechnung enthalten Daten, die jeweils zumindest die - gekaufte oder zu bezahlende - Leistung (beispielsweise Dienstleistung) oder Ware kennzeichnende Daten, zugeordnete Preis-Daten und einen Zeitpunkt kennzeichnende Daten (Datum des Kaufs oder der Rechnung) umfassen. Diese Daten will der Nutzer automatisiert geordnet erfassen, beispielsweise - im Falle eines Kassenbons oder einer Quittung - in einem persönlichen Ausgabenbuch derart erfassen, dass er davon ausgehend Summen in vorgegebenen Zeiträumen bestimmen oder statistische Auswertungen vornehmen kann. Im Falle einer - noch zu bezahlenden - Rechnung möchte der Nutzer beispielsweise die Rechnungsdaten, die er für eine Überweisung von seinem Bankkonto benötigt, automatisch erfassen und in eine Eingabemaske für eine elektronische Überweisung übertragen oder auch die Überweisung unmittelbar veranlassen.

Um dies auszuführen, nutzt der Benutzer das erfindungsgemäße System, indem er beispielsweise ein Anwendungsprogramm (eine App) auf seinem Mobiltelefon aufruft, die ihn zunächst auffordert, eine Aufnahme des Dokuments 3 mittels der Mobiltelefon-Kamera 2 herzustellen. Die Aufnahme wird dann in Form einer Bilddatei in dem Mobiltelefon 1 gespeichert. Die App veranlasst dann das Mobiltelefon, eine Verbindung zu dem Server 7 aufzunehmen und die Bilddatei und weitere Daten, wie insbesondere eine Identifikation des Benutzers, an den Server 7 zu senden. Dann wartet der Benutzer auf eine Antwort des Servers 7.

Die Datei und die weiteren Informationen werden beispielsweise im Format einer E-Mail oder einer SMS oder auch mittels eines anderen Datenübertragungsprotokolls über die Mobilfunkverbindung 4 (alternativ auch via Bluetooth oder über ein WLAN) und weiter über Kabelverbindungen oder andere drahtlose Verbindungen des Internets bis zum Server 7 übertragen.

Der Server 7 empfängt die die Bilddatei enthaltende Nachricht und startet ein Programm, dass unter anderem eine Erkennungssoftware 8 veranlasst, die Bilddatei zu verarbeiten, wobei die auf dem der wenigstens einen Bilddatei zugrunde liegenden Dokument enthaltenen alphanumerischen Informationen erkannt werden und darüber hinaus erkannt wird, ob es sich um ein einen Bezahlvorgang betreffendes Dokument handelt, insbesondere, ob es sich um einen Kassenbon, eine Quittung, eine andere Art eines Zahlungsbelegs (z.B. Parkschein oder Eintrittskarte) oder um eine Rechnung handelt. Dabei kann die Erkennungssoftware 8 mit einer hohen Intelligenz ausgestattet sein, insbesondere auch lernfähig sein und dabei auf "Erfahrungen" beim Erkennen früherer Dokumente desselben Benutzers oder anderer Benutzer zurückgreifen. Wenn das Programm erfasst, dass es sich um ein einen Bezahlvorgang betreffendes Dokument handelt, stellt es die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammen. Das Format und der Inhalt des Datensatzes hängen von der erkannten Art des Dokuments ab.

Sofern erkannt wird, dass es sich bei dem Dokument um einen Zahlungsbeleg in Form eines Kassenbons oder einer Quittung handelt, werden die einzelnen Positionen des Kassenbons bzw. der Quittung erkannt und werden für jede Position die Benennungen der gekauften Leistung oder Ware, ggf. noch die Mengen oder Stückzahlen, der zugehörige Preis (ggf. Einzelstückpreis und Gesamtpreis) und ein Zeitpunkt erfasst. Daraus wird ein Datensatz in einem vorgegebenen Format gebildet. Dann wird der Datensatz in eine Ausgaben-Datenbank 9 (die beispielsweise als eine Art Kassenbuch dienen kann) einstellt.

Diese Datensätze der Datenbank 9 können auf eine Anforderung hin auf dem Server 7 statistisch auswertet werden, beispielsweise dahingehend, welche Waren wie oft in einem bestimmten Zeitraum gekauft wurden. Dies erfolgt beispielsweise auf eine Anforderung des Nutzers, der zugleich seine Identifikation übermittelt, so dass er Zugriff auf seine Daten der Ausgaben-Datenbank erhalten kann. Dies kann aber auch auf Anforderung durch einen Dritten erfolgen, der die Ausgaben-Datenbank für viele Benutzer statistisch auswerten möchte. In diesem Fall wird vorzugsweise nur ein solcher Zugriff gestattet, bei dem die Zuordnung zu den Nutzern anonymisiert wird.

Sofern erkannt wird, dass es sich bei dem Dokument um eine Rechnung handelt, werden die Rechnungspositionen und die summarischen Rechnungsdaten sowie der Zahlungsadressat einschließlich seiner Konto-Daten (z.B. IBAN und BIC) erfasst. Dann wird entweder ein Datensatz, der auch die

Rechnungspositionen umfasst, oder ein Datensatz, der nur die für die Zahlung relevanten Daten umfasst, in eine Rechnungs-Datenbank 9 einstellt. An das Mobiltelefon 1 des Benutzers wird eine Antwort-Nachricht gesendet, die die für das Auslösen eines Bezahlvorgangs erforderlichen Daten enthält, nämlich die zu bezahlenden Leistungen oder Waren kennzeichnende Daten (beispielsweise eine Benennung der Leistungen oder Waren oder auch nur eine Rechnungsnummer), den zu bezahlenden Betrag und den Empfänger der Zahlung kennzeichnende Daten (z.B. Name, Adresse und Kontonummer oder IBAN und BIC).

Das Mobiltelefon 1 empfängt die Antwort-Nachricht, woraufhin die dort abgearbeitete App dem Benutzer die darin enthaltenen für das Auslösen eines Bezahlvorgangs erforderlichen Daten anzeigt, eine vorgegebene Eingabe des Benutzers überwacht, mit der der Benutzer das Auslösen des Bezahlvorgangs veranlassen kann, und bei Feststellen dieser vorgegebenen Eingabe eine der Eingabe entsprechende Nachricht an den Server 7 sendet. Der Benutzer kann beispielsweise dann, wenn er die Rechnung nicht bezahlen möchte (weil sie möglicherweise bereits bezahlt ist), eine entsprechende Nachricht an den Server 7 zurücksenden. Der Server 7 führt nach Empfang der der Eingabe entsprechenden Nachricht den Bezahlvorgang auf der Grundlage der Daten des Datensatzes aus. Anschließend meldet der Server 7 die erfolgreiche Bezahlung an den Benutzer mittels einer entsprechenden Nachricht an das Mobiltelefon 1.

## Patentansprüche

1. Datenerfassungsvorrichtung zum Erfassen und geordneten Speichern von Daten eines einen Bezahlvorgang betreffenden gedruckten und/oder geschriebenen Dokuments (3), insbesondere eines Kassenbons, einer Quittung oder einer Rechnung, aufweisend:
mindestens ein eine Kamera (2), ein Display und Schnittstellen zur Kommunikation über ein Datenkommunikationsnetz (4, 5, 6) aufweisendes Datenkommunikationsgerät (1) eines Benutzers, insbesondere ein Mobiltelefon, wobei das Datenkommunikationsgerät (1) so konfiguriert ist, dass es
in Abhängigkeit von einer vorgegebenen Benutzereingabe wenigstens ein elektronisches Abbild des Dokuments (3) mittels der Kamera (2) gewinnt und in Form wenigstens einer Bilddatei speichert,
die wenigstens eine Bilddatei zusammen mit einer Identifikation des Benutzers an eine vorgegebene Adresse über das Datenkommunikationsnetz (4, 5, 6) sendet und
Antwort-Nachrichten empfangen kann, und
einen mit dem Datenkommunikationsnetz (4, 5, 6) gekoppelten Server (7), der unter der vorgegebenen Adresse adressierbar ist und der über ausreichende Ressourcen zur Abarbeitung einer Erkennungssoftware (8) verfügt, wobei die Erkennungssoftware eine Software ist, die in einem Abbild des Dokuments enthaltene alphanumerische Zeichen und darüber hinaus auf der Basis der erkannten Zeichen und der Anordnung der Zeichen in dem Dokument auch die Art des Dokuments und bestimmte enthaltene Informationen erkennen kann, wobei der Server (7) so konfiguriert ist, dass er
die von dem Datenkommunikationsgerät (1) gesendete wenigstens eine Bilddatei und die Benutzeridentifikation empfängt,
die wenigstens eine Bilddatei mittels der auf dem Server (7) abgearbeiteten Erkennungssoftware (8) verarbeitet, wobei er
die auf dem der wenigstens einen Bilddatei zugrunde liegenden Dokument enthaltenen alphanumerischen Informationen erkennt,
erkennt, ob es sich um ein einen Bezahlvorgang betreffendes Dokument handelt, und
dann, wenn es sich um ein einen Bezahlvorgang betreffendes Dokument handelt, auch erkennt, ob es sich bei dem Dokument um einen Zahlungsbeleg in Form eines Kassenbons oder einer Quittung handelt oder ob es sich bei dem Dokument um eine Rechnung handelt, und die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammenstellt,
den Datensatz in eine der Art des Bezahlvorgangs entsprechende Datenbank (9) einstellt, wobei die Datenbank (9) eine Zuordnung des Datensatzes zur Identifikation des Benutzers aufweist, und
über das Datenkommunikationsnetz (4, 5, 6)an das Datenkommunikationsgerät (1) des Benutzers eine Antwort-Nachricht sendet, die das Einstellen der Daten des Dokuments in die Datenbank (9) bestätigt.

2. Datenerfassungsvorrichtung nach Anspruch 1, **dadurch gekennzeichnet, dass** das Datenkommunikationsgerät (1) ein mobiles, handgehaltenes Datenkommunikationsgerät, insbesondere ein Mobiltelefon, ist, und dass die auf dem Server (7) abgearbeitete Erkennungssoftware (8) in der Lage ist, auch dann die auf dem der wenigstens einen Bilddatei zugrunde liegenden Dokument (3) enthaltenen alphanumerischen Informationen zu erkennen, wenn die Bilddatei das Dokument geometrisch verzerrt und/oder in einem über das Dokument variierenden Kontrast und/oder in einer geringen Bildauflösung wiedergibt, die üblicherweise einer mittels einer Kamera (2) eines mobilen, handgehaltenen Datenkommunikationsgeräts (1), insbesondere eines Mobiltelefons, gewonnenen Bilddatei anhaften können.

3. Datenerfassungsvorrichtung nach Anspruch 1 oder 2,
**dadurch gekennzeichnet, dass** der Server (7) so konfiguriert ist, dass er dann, wenn er erkennt, dass es sich bei dem Dokument um einen Zahlungsbeleg in Form eines Kassenbons oder einer Quittung handelt, der Datensatz in eine Ausgaben-Datenbank einstellt.

4. Datenerfassungsvorrichtung nach Anspruch 1 oder 2,
**dadurch gekennzeichnet,**
**dass** der Server (7) so konfiguriert ist, dass er dann, wenn er erkennt, dass es sich bei dem Dokument um eine Rechnung handelt, der Datensatz in eine Rechnungs-Datenbank einstellt, wobei er an den Benutzer eine Antwort-Nachricht sendet, die für das Auslösen eines Bezahlvorgangs erforderliche Daten, die die zu bezahlende Leistung oder Ware kennzeichnende Daten, den zu bezahlenden Betrag und den Empfänger der Zahlung kennzeichnende Daten mit einer Empfängerkontonummer umfassen, enthält,
**dass** das Datenkommunikationsgerät (1) so konfiguriert ist, dass es die Antwort-Nachricht empfängt, dem Benutzer die darin enthaltenen für das Auslösen eines Bezahlvorgangs erforderlichen Daten anzeigt, eine vorgegebene Eingabe des Benutzers überwacht, mit der der Benutzer das Auslösen des Bezahlvorgangs veranlassen kann, bei Feststellen dieser vorgegebenen Eingabe eine der Eingabe entsprechende Nachricht über das Datenkommunikationsnetz (4, 5, 6) an den Server (7) sendet, und
**dass** der Server (7) so konfiguriert ist, dass er nach Empfang der der Eingabe entsprechenden Nachricht den Bezahlvorgang auf der Grundlage der Daten des Datensatzes ausführt.

5. Verfahren zum Erfassen und geordneten Speichern von Daten eines einen Bezahlvorgang betreffenden gedruckten und/oder geschriebenen Dokuments, insbesondere eines Kassenbons, einer Quittung oder einer Rechnung, wobei:
a) wenigstens ein elektronisches Abbild des Dokuments mittels einer Kamera eines Datenkommunikationsgeräts, insbesondere eines Mobiltelefons, eines Benutzers gewonnen und in Form wenigstens einer Bilddatei in dem Datenkommunikationsgerät gespeichert wird,
b) die wenigstens eine Bilddatei von dem Datenkommunikationsgerät des Benutzers über ein Datenkommunikationsnetz an einen Server übermittelt wird, wobei der Server über ausreichende Ressourcen zur Abarbeitung einer Erkennungssoftware verfügt, wobei zugleich eine Identifikation des Benutzers an den Server übermittelt wird, wobei die Erkennungssoftware eine Software ist, die in einem Abbild des Dokuments enthaltene alphanumerische Zeichen und darüber hinaus auf der Basis der erkannten Zeichen und der Anordnung der Zeichen in dem Dokument auch die Art des Dokuments und bestimmte enthaltene Informationen erkennen kann,
c) die wenigstens eine Bilddatei mittels der auf dem Server abgearbeiteten Erkennungssoftware verarbeitet wird, wobei
c1) die auf dem der wenigstens einen Bilddatei zugrunde liegenden Dokument enthaltenen alphanumerischen Informationen erkannt werden,
c2) erkannt wird, ob es sich um ein einen Bezahlvorgang betreffendes Dokument handelt, und
c3) dann, wenn es sich um ein einen Bezahlvorgang betreffendes Dokument handelt, auch erkannt wird, ob es sich bei dem Dokument um einen Zahlungsbeleg in Form eines Kassenbons oder einer Quittung handelt oder ob es sich bei dem Dokument um eine Rechnung handelt, und die für den Bezahlvorgang relevanten Daten, die jeweils zumindest die Leistung oder Ware kennzeichnende Daten, zugeordnete Preis-Daten und einen Zeitpunkt kennzeichnende Daten umfassen, zu einem Datensatz eines vorgegebenen Formats zusammengestellt werden,
d) der Datensatz in eine der Art des Bezahlvorgangs entsprechende Datenbank eingestellt wird, wobei die Datenbank eine Zuordnung des Datensatzes zur Identifikation des Benutzers aufweist, und
e) von dem Server über das Datenkommunikationsnetz an das Datenkommunikationsgerät des Benutzers eine Nachricht gesendet wird, die das Einstellen der Daten des Dokuments in die Datenbank bestätigt.

6. Verfahren nach Anspruch 5, **dadurch gekennzeichnet,**
**dass** das elektronische Abbild mittels einer Kamera eines mobilen, handgehaltenen Datenkommunikationsgeräts, insbesondere eines Mobiltelefons, gewonnen wird, und
**dass** im Schritt c1) die auf dem der wenigstens einen Bilddatei zugrunde liegenden Dokument enthaltenen alphanumerischen Informationen auch dann erkannt werden, wenn die Bilddatei das Dokument geometrisch verzerrt und/oder in einem über das Dokument variierenden Kontrast und/oder in einer geringen Bildauflösung wiedergibt, die üblicherweise einer mittels einer Kamera eines mobilen, handgehaltenen Datenkommunikationsgeräts, insbesondere eines Mobiltelefons, gewonnenen Bilddatei anhaften können.

7. Verfahren nach Anspruch 5 oder 6, **dadurch gekennzeichnet, dass** dann, wenn im Schritt c3) erkannt wird, dass es sich bei dem Dokument um einen Zahlungsbeleg in Form eines Kassenbons oder einer Quittung handelt, der Datensatz im Schritt d) in eine Ausgaben-Datenbank eingestellt wird.

8. Verfahren nach Anspruch 7, **dadurch gekennzeichnet, dass** auf eine Anforderung hin auf dem Server ein Programm abgearbeitet wird, das die Daten der Ausgaben-Datenbank statistisch auswertet.

9. Verfahren nach Anspruch 5 oder 6, **dadurch gekennzeichnet, dass** dann, wenn im Schritt c3) erkannt wird, dass es sich bei dem Dokument um eine Rechnung handelt, der Datensatz im Schritt d) in eine Rechnungs-Datenbank eingestellt wird,
wobei im Schritt e) an den Benutzer eine Antwort-Nachricht übermittelt wird, die für das Auslösen eines Bezahlvorgangs erforderliche Daten, die die zu bezahlende Leistung oder Ware kennzeichnende Daten, den zu bezahlenden Betrag und den Empfänger der Zahlung kennzeichnende Daten mit einer Empfängerkontonummer umfassen, enthält,
woraufhin dem Benutzer die in der Antwort-Nachricht enthaltenen für das Auslösen eines Bezahlvorgangs erforderlichen Daten angezeigt werden, eine vorgegebene Eingabe des Benutzers überwacht wird, mit der der Benutzer das Auslösen des Bezahlvorgangs veranlassen kann, bei Feststellen dieser vorgegebenen Eingabe eine der Eingabe entsprechende Nachricht von dem Datenkommunikationsgerät über das Datenkommunikationsnetz an den Server übermittelt wird, woraufhin ein auf dem Server abgearbeitetes Programm den Bezahlvorgang auf der Grundlage der Daten des Datensatzes ausführt.

## Claims

1. A data acquisition device for detecting and ordered storing of data of a printed and/or written-on document (3) relating to a payment process, in particular a till receipt, a sales voucher or an invoice, comprising:
at least one data communication device (1) of a user, comprising a camera (2), a display and interfaces for communication over a data communication network (4, 5, 6), in particular a mobile phone, wherein the data communication device (1) is configured such that the data communication device (1)
acquires, depending on a predefined user input, at least one electronic image of a document (3) by means of the camera (2) and stores this image in form of at least one image file,
sends the at least one image file together with an identification of the user to a predefined address over the data communication network (4, 5, 6) and
can receive response messages,
and a server (7) coupled to the data communication network (4, 5, 6), which is addressable by the predefined address and which has sufficient resources for executing a recognition software (8), wherein the recognition software is a software, which can recognise alphanumeric characters contained in an image of the document and also, in addition on the basis of the recognised characters and the arrangement of the characters in the document, the type of document and certain information contained therein, wherein the server (7) is configured such that it
receives the at least one image file sent by the data communication device (1) and the user identification,
processes the at least one image file by means of the recognition software (8) running on the server (7), wherein it
recognises the alphanumeric information contained in the document underlying the at least one image file,
recognises, whether this is a document relating to a payment process, and
then, if this is a document relating to a payment process, also recognises, whether the document is a payment receipt in form of a till receipt or a sales voucher or whether the document is an invoice, and collates the data relevant for the payment process, the data comprising, respectively, data identifying at least the service or the goods, associated price data and data identifying a point in time, in order to form a data record of a predefined format,
enters the data record into a kind of database (9) corresponding to the type of payment process, wherein the database (9) comprises an association of the data record with the user identification, and
sends a response message over the data communication network (4, 5, 6) to the user's data communication device (1), which confirms entry of the data of the document into the database (9).

2. The data acquisition device according to claim 1, **characterised in that** the data communication device (1) is a mobile hand-held data communication device, in particular a mobile phone, and **in that** the recognition software (8) executed on the server (7) is capable of recognising the alphanumeric information contained in the document (3) underlying the at least one image file even if the image file distorts the document geometrically and/or reproduces it in a low image resolution, with which an image file usually captured by a camera (2) of a mobile hand-held data communication device (1), in particular a mobile phone, may be afflicted.

3. The data acquisition device according to claim 1 or 2, **characterised in that** the server (7) is configured such that then, when it recognises that the document is a payment receipt in the form of a till receipt or a sales voucher, it enters the data record into an output database.

4. The data acquisition device according to claim 1 or 2, **characterised in that**
the server (7) is configured such that then, when it recognises that the document is an invoice, it enters the data record into an invoice database, wherein it sends a response message to the user, which contains the data required for triggering a payment process, the data comprising data identifying the service or goods to be paid for, the amount to be paid and the data identifying the recipient of the payment together with a recipient's account number,
the data communication device (1) is configured such that it receives the response message, indicates to the user the data contained therein and required for triggering a payment process, monitors a predefined user input with which the user can initiate the triggering of a payment process, on detecting this predefined input, sends a message to the server (7) corresponding to the input over the data communication network (4, 5, 6), and
**in that** the server (7) is configured such that following receipt of the message corresponding to the input carries out the payment process on the basis of the data in the data record.

5. A method for acquiring and ordered storing of data of a printed and/or written-on document relating to a payment process, in particular a till receipt, a sales voucher or an invoice, wherein
a) at least one electronic image of a document is acquired by means of a camera of a data communication device, in particular a user's mobile phone, and is stored in the data communication device in form of at least one image file,
b) the at least one image file is transmitted from the user's data communication device over a data communication network to a server, wherein the server has sufficient resources for executing a recognition software, wherein an identification of the user is simultaneously transmitted to the server, wherein the recognition software is a software, which can recognise alphanumeric characters contained in an image of the document and in addition also, on the basis of the recognised characters and the arrangement of the characters in the document, the type of document and certain information contained therein,
c) the at least one image file is processed by means of the recognition software executed on the server, wherein
c1) the alphanumeric information contained in the document underlying the at least one image file is recognised,
c2) it is recognised, whether the document is a document relating to a payment process, and
c3) then, when the document is a document relating to a payment process, it is also recognised, whether the document is a payment receipt in form of a till receipt or a sales voucher, or whether the document is an invoice and the data relevant for a payment process, which respectively comprises data identifying the service or goods, associated price data and data identifying a point in time, is collated to form a data record of a predefined format,
d) the data record is entered into a database corresponding to the type of payment process, wherein the database comprises an association of the data record with the user's identification, and
e) a message is sent from the server via the user's data communication network to the data communication device, which confirms entry of the data of the document into the database.

6. The method according to claim 5, **characterised in that** the electronic image is acquired by means of a camera of a mobile, hand-held data communication device, in particular a mobile phone, and
that in step c1) the alphanumeric information contained in the document underlying the at least one image file is recognised even if the image file distorts the document geometrically and/or reproduces it in a contrast varying across the document and/or in a low image resolution, with which an image file usually captured by a camera of a mobile hand-held data communication device, in particular a mobile phone, may be afflicted.

7. The method according to claim 5 or 6, **characterised in that**, even if is recognised in step c3) that the document is a payment receipt in form of a till receipt or a sales voucher, the data record is entered into an output database in step d).

8. The method according to claim 7, **characterised in that** in response to a request a program is executed on the server, which statistically evaluates the data of the output database.

9. The method according to claim 5 or 6, **characterised in that** then, when it is recognised in step c3) that the document is an invoice, the data record is entered into an invoice database in step d),
wherein in step e) a response message is transmitted to the user, which contains data required for triggering the payment process, the data identifying the service or goods to be paid for, data identifying the amount to be paid and the recipient of the payment together with a recipient's account number,
whereupon the data contained in the response message and required for triggering the payment process is indicated to the user, a predefined user's entry with which the user can initiate triggering of the payment process is monitored, upon detecting this predefined entry a message corresponding to the entry is transmitted from the data communication device over the data communication network to the server, whereupon a program running on the server executes the payment process on the basis of the data of the data record.

## Revendications

1. Dispositif d'acquisition de données pour capturer et mémoriser de manière ordonnée des données d'un document imprimé et/ou écrit (3) relatif à un processus de paiement, notamment un reçu de caisse, une quittance ou une facture, présentant :
au moins une caméra (2), un écran et une interface de communication via un dispositif de communication de données (1) d'un utilisateur présentant un réseau de communication de données (4, 5, 6), notamment un téléphone mobile, dans lequel le dispositif de communication de données (1) est configuré de telle sorte qu'il
obtienne en fonction d'une entrée d'utilisateur prédéterminée au moins une image électronique du document (3) au moyen de la caméra (2) et la mémorise sous la forme d'au moins un fichier d'image,
envoie au moins un fichier d'image conjointement à une identification de l'utilisateur à une adresse prédéterminée via le réseau de communication de données (4, 5, 6) et
peut recevoir des messages de réponse, et
un serveur (7), couplé au réseau de communication de données (4, 5, 6), qui est adressable à l'adresse spécifiée et dispose de ressources suffisantes pour traiter un logiciel de reconnaissance (8), dans lequel le logiciel de reconnaissance est un logiciel qui contient des caractères alphanumériques contenus dans une image du document et en outre sur la base des caractères reconnus et de l'agencement des caractères du document peut également reconnaître le type de document et certaines informations contenues, dans lequel le serveur (7) est configuré de manière à
recevoir au moins un fichier d'image du dispositif de communication de données (1) et l'identification de l'utilisateur,
traiter au moins un fichier d'image au moyen du logiciel de reconnaissance (8) exécuté sur le serveur (7), dans lequel il
reconnaît les informations alphanumériques contenues sur le document sous-jacent à au moins un fichier d'image,
reconnaît s'il s'agit d'un document relatif au processus de paiement, et
alors, s'il s'agit d'un document concerné par le processus de paiement, reconnaît également si le document est un reçu sous la forme d'un reçu de caisse ou d'une quittance ou si le document est une facture, et compile dans un enregistrement de données d'un format prédéterminé les données pertinentes pour le processus de paiement, au moins les données caractérisant le service ou les biens, les données de prix et les données désignant un point temporel attribuées,
l'enregistrement de données définit dans une base de données correspondante (9) le type de processus de paiement, dans lequel la base de données (9) attribue l'enregistrement de données à l'identification de l'utilisateur, et
envoie via le réseau de communication de données (4, 5, 6) au dispositif de communication de données d'utilisateur (1) un message qui confirme que les données du document ont été entrées dans la base de données (9).

2. Dispositif d'acquisition de données selon la revendication 1, **caractérisé en ce que** le dispositif de communication de données (1) est un dispositif de communication de données mobile et portable, en particulier un téléphone mobile, et que le logiciel de reconnaissance (8) traité sur le serveur (7) est également en mesure de reconnaître les informations alphanumériques contenues dans le document (3) sous-jacent à au moins un fichier d' image, lorsque le fichier d'image déforme géométriquement le document et/ou restitue en un contraste variable sur le document et/ou dans une faible résolution d'image, qui peut généralement se conformer à un fichier d'image obtenu au moyen d'une caméra (2) d'un appareil mobile de communication de données portable (1), notamment un téléphone mobile.

3. Dispositif d'acquisition de données selon la revendication 1 ou 2, **caractérisé en ce que** le serveur (7) est configuré de telle sorte que lorsqu'il reconnaît que le document consiste en un récépissé de paiement sous forme de reçu de caisse ou quittance, l'enregistrement est placé dans une base de données de dépenses.

4. Dispositif d'acquisition de données selon la revendication 1, **caractérisé en ce que**
le serveur (7) est configuré de sorte que lorsqu'il détecte que le document est une facture, il enregistre l'enregistrement dans une base de données de factures, dans lequel il envoie un message de réponse à l'utilisateur, qui contient les données requises pour déclencher une transaction de paiement, les données identifiant le service ou les biens à payer, le montant à payer et les données identifiant le destinataire du paiement avec un numéro de compte du destinataire,
que le dispositif de communication de données (1) est configuré pour recevoir le message de réponse, afficher à l'utilisateur les données qu'il contient pour déclencher un processus de paiement, surveiller une entrée prédéterminée par l'utilisateur, avec laquelle l'utilisateur peut provoquer le déclenchement du processus de paiement, en cas de détection de cette entrée prédéterminée envoyer un message correspondant à l'entrée via le réseau de communication de données (4, 5, 6) au serveur (7), et
que le serveur (7) est configuré de manière à exécuter le processus de paiement sur la base des données de l'enregistrement de données après la réception du message correspondant à l'entrée.

5. Procédé de capture et de mémorisation ordonnée d'un document imprimé et/ou écrit relatif à un processus de paiement, notamment un reçu de caisse, une quittance ou une facture, dans lequel :
a) au moins une image électronique du document obtenue au moyen d'une caméra d'un dispositif de communication de données, notamment un téléphone mobile, d'un utilisateur est mémorisée sous forme d'au moins un fichier d'image dans le dispositif de communication de donnée,
b) au moins un fichier d'image du dispositif de communication de données de l'utilisateur est transmis via un réseau de communication de données à un serveur, dans lequel le serveur dispose de ressources suffisantes pour exécuter un logiciel de reconnaissance, dans lequel simultanément une identification de l'utilisateur est transmise au serveur, dans lequel le logiciel de reconnaissance est un logiciel contenant des caractères alphanumériques contenus dans une image du document et en outre sur la base des caractères reconnus et de la disposition des caractères dans le document peut également reconnaître le type de document et certaines informations qu'il contient,
c) au moins un fichier d'image est traité au moyen du logiciel de reconnaissance traité sur le serveur, dans lequel
c1) les informations alphanumériques contenues dans le document sous-jacent à au moins un fichier d'images sont reconnues,
c2) il est reconnu s'il s'agit d'un document relatif à une transaction de paiement, et
c3) puis, s'il s'agit d'un document relatif à une transaction de paiement, il est également reconnu si le document est une preuve de paiement sous la forme d'un reçu de paiement ou une quittance ou si le document est une facture et les données pertinentes pour le processus de paiement, qui caractérisent au moins le service ou les biens, comprennent des données de prix attribuées et des données identifiant un point temporel, sont compilées dans un enregistrement de données d'un format prédéterminé,
d) l'enregistrement de données est placé dans une base de données correspondant au type de processus de paiement, dans lequel la base de données présente une affectation de l'enregistrement de données pour identifier l'utilisateur, et
e) un message est envoyé du serveur via le réseau de communication de données au dispositif de communication de données de l'utilisateur, qui confirme le paramétrage des données du document dans la base de données.

6. Procédé selon la revendication 5, **caractérisé en ce que**
l'image électronique est obtenue au moyen d'une caméra d'un appareil mobile de communication de données portable, notamment un téléphone mobile, et
qu'à l'étape c1) les informations alphanumériques contenues dans au moins un document sous-jacent au fichier d'image peuvent également être reconnues lorsque le fichier d'image est déformé géométriquement et/ou restitué avec un contraste variant à travers le document et/ou dans une faible résolution d'image, qui peut généralement se conformer à un fichier d'image obtenu au moyen d'une caméra d'un appareil mobile de communication de données portable, notamment un téléphone mobile.

7. Procédé selon la revendication 5 ou 6, **caractérisé en ce que** lorsqu'il est reconnu à l'étape c3) que le document est un reçu de paiement sous forme d'un reçu de caisse ou une quittance, l'enregistrement de données à l'étape d) est placé dans une base de données de dépenses.

8. Procédé selon la revendication 7, **caractérisé en ce que**, sur demande, un programme est exécuté sur le serveur qui évalue statistiquement les données de la base de données de dépenses.

9. Procédé selon la revendication 5 ou 6, **caractérisé en ce que** lorsqu'il est reconnu à l'étape c3) que le document est une facture, l'enregistrement de données à l'étape d) est placé dans une base de données de facturation,
dans lequel à l'étape e) un message de réponse est transmis à l'utilisateur, qui contient les données nécessaires pour déclencher un processus de paiement, les données identifiant le service ou les biens à payer, le montant à payer et le destinataire du paiement avec un numéro de compte de destinataire,
après quoi les données contenues dans le message de réponse requises pour déclencher un processus de paiement sont affichées à l'utilisateur, une entrée prédéterminée de l'utilisateur est surveillée, avec laquelle l'utilisateur peut provoquer le déclenchement du processus de paiement, lors de la détection de cette entrée prédéterminée, un message correspondant à l'entrée est transmis par le dispositif de communication de données sur le réseau de communication de données au serveur, après quoi un programme exécuté sur le serveur exécute le processus de paiement sur la base des données de l'enregistrement de données.
